# FASCICULE DE BREVET EUROPEEN

(11) **EP 2 785 508 B1**
(45) Date de publication et mention de la délivrance du brevet: **01.01.2020**
(21) Numéro de dépôt: 12791204.6
(22) Date de dépôt: 28.11.2012
(51) Int. Cl.: B29C 49/58

(54) **DISPOSITIF DE SOUFFLAGE COMPORTANT UNE TUYÈRE ET UN CONDUIT D'ALIMENTATION FORMANT UN ANGLE OBTUS**
BLASVORRICHTUNG MIT EINER DÜSE UND EINEM ZUFUHRKANAL IN EINEM STUMPFEN WINKEL
BLOWING DEVICE COMPRISING A NOZZLE AND A SUPPLY DUCT FORMING AN OBTUSE ANGLE

(30) Priorité: 01.12.2011 FR 1161013
(43) Date de publication de la demande: 08.10.2014
(73) Titulaire: Sidel Participations, 76930 Octeville-sur-Mer (FR)
(72) Inventeur: BARON, Alain, F-76930 Octeville Sur Mer (FR); LECOMTE, Frédéric, F-76930 Octeville Sur Mer (FR); LEMAIRE, Cédric, F-76930 Octeville Sur Mer (FR)
(74) Mandataire: Grassin d'Alphonse, Emmanuel Jean Marie
(86) Numéro de dépôt international: PCT/EP2012/073821
(87) Numéro de publication internationale: WO 2013/079522

(56) Documents cités:
- DE-A1- 4 327 363
- FR-A1- 2 889 672
- JP-A- 6 234 152

## Description

L'invention concerne un dispositif de soufflage destiné au formage de récipients à partir de préformes en matériau thermo-plastique.

L'invention concerne plus particulièrement un dispositif de soufflage destiné au formage de récipients à partir de préformes en matériau thermoplastique, le dispositif comportant :
- une tuyère de soufflage comportant à son extrémité inférieure un orifice de sortie d'un fluide de soufflage sous pression selon un axe vertical de sortie ;
- un conduit unique d'alimentation de la tuyère en fluide de soufflage qui débouche dans un tronçon supérieur d'entrée de la tuyère par un orifice supérieur d'alimentation, le tronçon d'extrémité aval dudit conduit étant orienté globalement radialement par rapport à l'axe d'entrée du tronçon d'entrée de la tuyère.

Il est connu de réaliser des récipients en matériau thermoplastique par soufflage de préformes préalablement chauffées. Le chauffage permet de rendre malléables les parois de la préforme pour permettre son formage en un récipient final sans déchirure de ladite paroi.

Le formage d'un récipient final est réalisé par soufflage de la préforme à l'intérieur d'un moule comportant une empreinte conforme au récipient final.

La production en grande série de tels récipients est réalisée au moyen d'une installation qui est équipée de nombreux moules de soufflage. Le grand nombre de moules permet de produire les récipients à une cadence élevée. Les moules sont par exemple portés par un carrousel qui tourne de manière que les préformes soient soufflées les unes après les autres à grande cadence pendant leur déplacement entre un point d'introduction correspondant à l'introduction des préformes dans un moule associé, et un point de démoulage correspondant à l'éjection du récipient final à l'extérieur dudit moule. Le déplacement du moule entre son point d'introduction et son point de démoulage correspond à un cycle de soufflage.

L'opération de soufflage consiste généralement à remplir les préformes avec du fluide à très haute pression, par exemple à 40 bars. Le fluide de soufflage pousse ainsi les parois malléables de la préforme contre l'empreinte du moule, permettant ainsi le formage du récipient final.

Cette opération de soufflage est parfois accompagnée ou précédée d'une opération d'étirage au cours de laquelle la préforme est étirée axialement par une tige axiale coulissante dite "d'élongation" qui est introduite par le col de la préforme. Cette opération d'étirage mécanique a pour but d'étirer axialement les parois de la préforme en prenant appui sur le fond de la préforme afin d'approcher le fond de la préforme du fond du moule. Une telle opération est notamment utilisée lors de la production de récipients relativement grands par rapport à la taille de la préforme, tels que des bouteilles.

Lorsqu'elle a lieu avant l'opération de soufflage, l'opération d'étirage est généralement accompagnée d'une opération de pré-soufflage de la préforme à une pression relativement basse, par exemple 10 bars. Le fluide à basse pression permet d'initier la déformation de la préforme. Il permet aussi d'écarter radialement les parois de la préforme par rapport à la tige d'élongation afin d'éviter que la matière constituant la préforme n'adhère à la tige d'élongation et ne se déchire lors du coulissement de la tige d'élongation.

Toutes ces opérations sont réalisées pendant un cycle de soufflage de durée très courte afin de maintenir une cadence élevée de production de récipients. Pour ce faire, le débit de fluide de soufflage doit être très élevé et la montée en pression du fluide dans la tuyère et dans la préforme doit être très rapide.

Pour résoudre ce problème, il est connu de réduire le volume à mettre en pression en modifiant la longueur ou le diamètre du conduit d'alimentation, par exemple en agençant des vannes d'alimentation au plus près de la tuyère.

Cependant, les solutions existantes ne sont pas entièrement satisfaisantes, et elles nécessitent beaucoup d'énergie pour forcer le débit de fluide dans la tuyère.

Le document FR 2 889 672 A1 divulgue une tuyère de l'état de la technique présentant une conduite d'alimentation radiale formant un angle d'environ 90° avec l'axe de la tuyère. Le document DE 43 27 363 A1 divulgue une tuyère de l'état de la technique dans laquelle un tuyau d'alimentation souple est relié avec l'axe de la tuyère.

La présente invention propose de résoudre notamment ces problèmes grâce à un dispositif de soufflage selon la revendication 1.

Selon d'autres caractéristiques du dispositif de soufflage :
- un tronçon d'extrémité aval du conduit d'alimentation présente un axe rectiligne ;
- l'axe d'entrée est incliné d'un angle par rapport à l'axe de sortie, et en ce que la tuyère présente un tronçon inférieur de sortie coaxial à l'axe de sortie ;
- l'axe d'entrée, l'axe de sortie et l'axe d'embranchement sont agencés dans un même plan ;
- l'axe de sortie de la tuyère 12 est compris à l'intérieur du tronçon d'entrée de la tuyère jusqu'à son plafond ;
- à la hauteur de l'orifice d'alimentation, la tuyère présente une section dont le centre est décalé transversalement vers l'orifice d'alimentation par rapport à l'axe de sortie de la tuyère ;
- l'orifice de sortie présente une section de forme sensiblement circulaire de centre coaxial à l'axe de sortie de la tuyère ;
- la tuyère est délimitée vers le haut par un plafond, le conduit d'alimentation débouchant dans la tuyère en passant au moins partiellement à travers le plafond ;
- le conduit d'alimentation débouche dans la tuyère en passant au moins partiellement à travers une paroi latérale de la tuyère ;
- le dispositif comporte une tige verticale d'élongation qui est montée coulissante verticalement dans la tuyère au travers d'un passage qui est réalisé au moins partiellement à travers le plafond, la tige d'élongation étant agencée de manière coaxiale à l'axe de sortie ;
- le passage de la tige d'élongation est réalisé au moins partiellement à travers une paroi opposée à l'orifice d'alimentation ;
- la tige d'élongation est agencée de manière que le flux de fluide de soufflage délivré par le conduit d'alimentation soit dirigé directement sur la tige d'élongation ;
- la tuyère présente une section dont l'aire diminue progressivement en descendant le long de l'axe de sortie depuis l'orifice d'alimentation ;
- la tige d'élongation est guidée en coulissement par au moins une bague supérieure et une bague d'extrémité inférieure, la bague d'extrémité inférieure étant agencée verticalement au-dessus de l'orifice d'alimentation ;
- des moyens d'étanchéité sont interposés dans le passage de la tige d'élongation au-dessus de l'orifice d'alimentation pour empêcher la fuite du fluide de soufflage vers le haut ;
- un orifice de prise de pression est agencé diamétralement à l'opposé de l'orifice d'alimentation dans la paroi du passage, au-dessous des moyens d'étanchéité.

D'autres caractéristiques et avantages du dispositif de soufflage apparaîtront au cours de la lecture de la description détaillée qui va suivre pour la compréhension de laquelle on se reportera aux dessins annexés parmi lesquels :
- la figure 1 est une représentation schématique d'un dispositif de soufflage réalisé selon les enseignements de l'invention ;
- la figure 2 est une vue en coupe axiale qui représente la tuyère du dispositif de soufflage de la figure 1 ;
- la figure 3 est une vue similaire à celle de la figure 2 dans laquelle la tige d'élongation et la cloche n'ont pas été représentées ;
- la figure 4 est une vue en section horizontale selon le plan de coupe 4-4 de la figure 2 représentant la section de la tuyère à la hauteur de l'embranchement avec le conduit d'alimentation ;
- la figure 5 est une vue en section horizontale selon le plan de coupe 5-5 de la figure 2 représentant la section de la tuyère globalement à mi-hauteur de son tronçon d'entrée ;
- la figure 6 est une vue en section horizontale selon le plan de coupe 6-6 de la figure 2 représentant la section de la tuyère à la hauteur de l'extrémité inférieure de son tronçon d'entrée ;
- la figure 7A est une vue de face représentant schématiquement les axes d'entrée et de sortie agencés selon les enseignements de l'invention ;
- la figure 7B est une vue de côté représentant schématiquement les axes d'entrée et de sortie agencés selon une variante de l'invention.

Par la suite, on adoptera à titre non limitatif des orientations :
- longitudinale "L" dirigée d'arrière en avant ;
- verticale "V" dirigée de bas en haut ;
- transversale "T" dirigée de gauche à droite.

Par la suite, des éléments présentant une structure identique ou des fonctions similaires seront désignés par des mêmes numéros de référence. Notamment, la préforme 24 et le récipient 24 final réalisé par soufflage à partir de ladite préforme 24 seront désignés par un même numéro de référence.

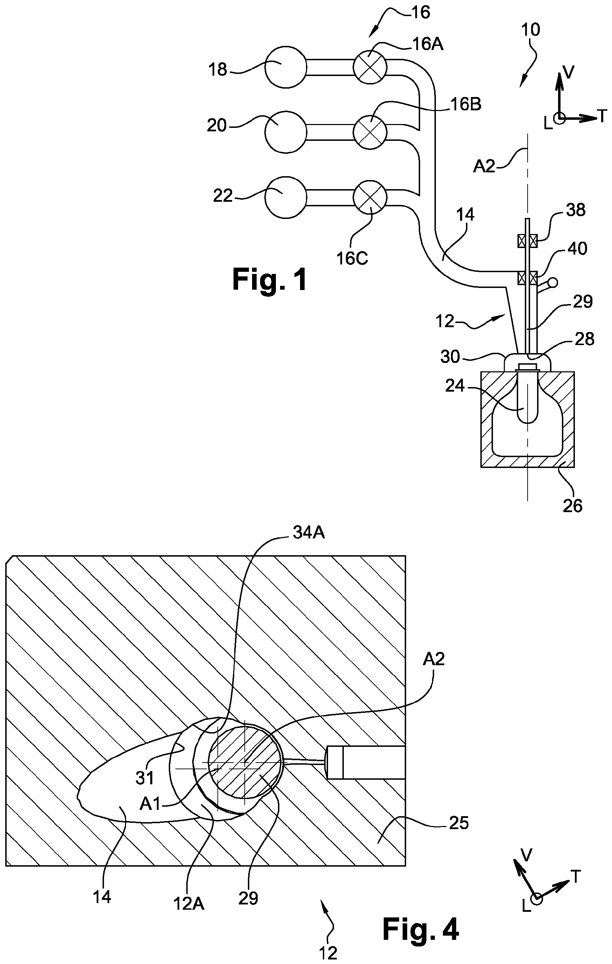

On a représenté à la figure 1 un dispositif 10 de soufflage réalisé selon les enseignements de l'invention. Le dispositif 10 de soufflage comporte principalement une tuyère 12, un unique conduit 14 d'alimentation en fluide de la tuyère 12 et un ensemble 16 de trois vannes 16A, 16B, 16C commandées.

La première vanne 16A permet de raccorder de manière commandée une source 18 de fluide à haute pression, par exemple à 40 bars, avec le conduit 14 d'alimentation pour réaliser une opération de soufflage.

La deuxième vanne 16B permet de raccorder de manière commandée une source 20 de fluide à basse pression, par exemple à 10 bars, avec le conduit 14 d'alimentation pour réaliser une opération de pré-soufflage.

Les fluides à haute pression et à basse pression sont ici formés par un gaz compressible tel que de l'air. Dans la suite de la description, le terme "fluide de soufflage" désignera indifféremment le fluide à haute pression ou le fluide à basse pression.

La troisième vanne 16C permet de raccorder de manière commandée le conduit 14 d'alimentation avec un moyen 22 de stockage de fluide de soufflage et/ou avec un moyen d'échappement (non représenté).

Du fait du raccordement du conduit 14 d'alimentation à diverses sources 18, 20, celui-ci est parfois appelé "nourrice".

Le dispositif 10 de soufflage est destiné au formage de récipients 24 finaux à partir de préformes 24 en matériau thermoplastique. Une telle préforme 24 a été représentée à la figure 1. La préforme 24 présente une forme d'éprouvette d'axe "A2" principal vertical.

La préforme 24 est introduite dans l'empreinte concave d'un moule 26 de manière qu'un col de la préforme 24 fasse saillie verticalement vers le haut à l'extérieur du moule 26.

La préforme 24 a été chauffée par des moyens non représentés préalablement à son insertion dans le moule 26. Le matériau constituant les parois de la préforme 24 est ainsi susceptible d'être étiré et soufflé.

Comme représenté aux figures 1 à 3, la tuyère 12 de soufflage est une conduite globalement verticale. Un tronçon 12A d'extrémité supérieur de la tuyère 12, dit tronçon 12A d'entrée, est réalisé dans un bloc 25 de matériau métallique tandis qu'un tronçon 12B d'extrémité inférieure de la tuyère 12, dit tronçon 12B de sortie, est réalisé dans un tube 27 qui est fixé sous le bloc 25.

La tuyère 12 comporte à son extrémité inférieure un orifice 28 de sortie d'un fluide de soufflage sous pression selon un axe "A2" vertical de sortie. Cet axe "A2" de sortie coïncide avec l'axe "A2" principal de la préforme24 lorsque cette dernière est reçue dans le moule 26.

Le tronçon 12A d'entrée de la tuyère 12 est délimité verticalement vers le haut par un plafond 32 et latéralement dans toutes les directions par une paroi 34A intérieure. Le tronçon 12A d'entrée débouche vers le bas dans la face inférieure du bloc 25.

Le tronçon 12B de sortie est délimité latéralement dans toutes les directions par une paroi 34B intérieure qui s'étend dans la continuité de la paroi 34A du tronçon 12A d'entrée. De manière générale, la conduite formant tuyère 12 ne présente aucune face d'épaulement.

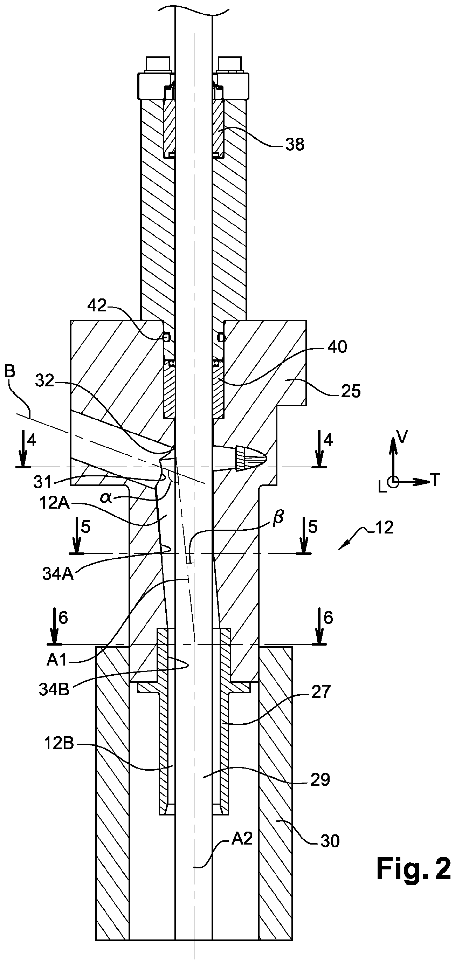

L'orifice 28 de sortie de la tuyère 12 est destiné à être raccordé de manière étanche avec l'intérieur de la préforme 24. A cet effet, dans l'exemple représenté aux figures 1 et 2, l'orifice 28 de sortie de la tuyère 12 est équipé d'une cloche 30 qui est destinée à être plaquée de manière étanche contre une face supérieure du moule 26 en englobant le col de la préforme 24.

On pourra bien sûr prévoir d'autres moyens de raccordement étanche de la tuyère 12 avec la préforme 24.

Par exemple, selon une variante non représentée de l'invention, l'extrémité inférieure de la tuyère est introduite à l'intérieur du col de la préforme avec interposition radiale d'un joint d'étanchéité entre la face cylindrique interne du col et la face cylindrique externe de la tuyère.

Le dispositif 10 de soufflage comporte une tige 29 verticale d'élongation dont un tronçon d'extrémité inférieure est agencé à l'intérieur de la tuyère 12. L'axe vertical de la tige 29 d'élongation est coaxial avec l'axe "A2"de sortie de la tuyère 12. La tige d'élongation 29 traverse verticalement la tuyère 12 sur toute sa hauteur.

La tige 29 d'élongation est montée coulissante verticalement à l'intérieur de la tuyère 12 entre une position haute dans laquelle l'extrémité inférieure de la tige 29 d'élongation est destinée à être agencée verticalement au-dessus du fond de la préforme 24, et une position basse dans laquelle la tige 29 d'élongation étire la préforme 24 vers le fond du moule 26.

Lors de l'opération de pré-soufflage, la deuxième vanne 16B est tout d'abord commandée dans une position ouverte de manière à alimenter la préforme 24 en fluide de soufflage à basse pression via le conduit 14 d'alimentation et la tuyère 12.

Une opération d'étirage est déclenchée simultanément ou presque simultanément à l'opération de pré-soufflage. Lors de cette opération d'étirage, la tige 29 d'élongation est commandée en coulissement vers sa position basse afin d'étirer la préforme verticalement vers le bas.

A l'issue de l'opération de pré-soufflage, la deuxième vanne 16B est fermée.

L'opération de soufflage est alors déclenchée. La première vanne 16A est alors commandée dans une position ouverte de manière à alimenter la préforme 24 en fluide à haute pression via le conduit 14 d'alimentation et la tuyère 12. Puis la première vanne 16A est fermée.

Enfin, lors d'une opération d'échappement ou de dégazage, la troisième vanne 16C est commandée en position ouverte afin de permettre au fluide de soufflage résiduel contenu dans le récipient 24 final de s'échapper via la tuyère 12 et le conduit 14 d'alimentation. Cette dernière opération permet d'égaliser la pression à l'intérieur du récipient 24 final avec la pression atmosphérique afin de pouvoir séparer la tuyère 12 du récipient 24 final sans produire de bruit retentissant dû à un échappement non maîtrisé du fluide de soufflage résiduel.

Le dispositif 10 de soufflage selon l'invention a été réalisé de manière à favoriser un écoulement subsonique du fluide de soufflage, notamment afin d'éviter la formation d'ondes de chocs et de manière à diminuer les pertes de charge. Le volume de la tuyère 12 a aussi été diminué afin d'éviter les dépenses d'énergie inutiles pour faire monter en pression le fluide de soufflage à l'intérieur de la tuyère 12.

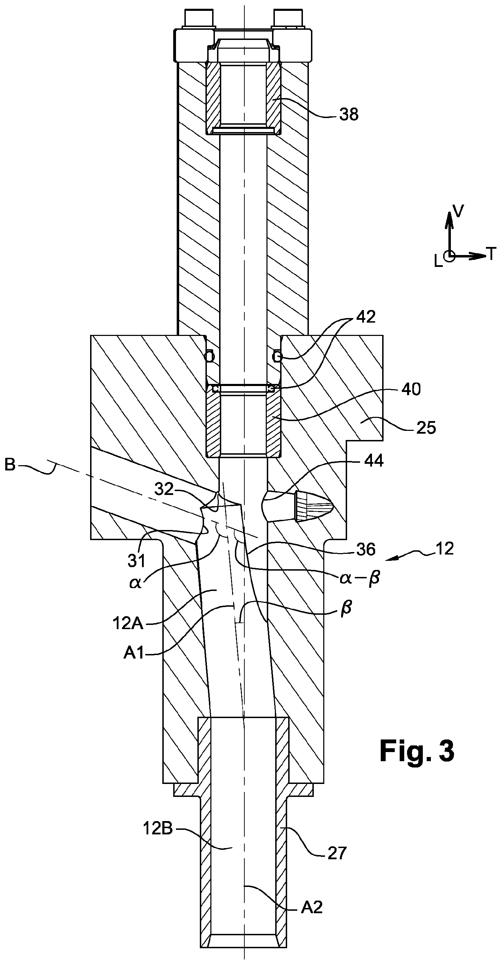

On se reportera aux figures 2 et 3 pour la description de la tuyère 12 et de l'agencement du conduit 14 d'alimentation.

Le conduit 14 unique d'alimentation de la tuyère 12 en fluide de soufflage débouche dans une partie supérieure de la tuyère 12, à proximité du plafond 32, par l'intermédiaire d'un orifice 31 supérieur d'alimentation. La tuyère 12 comporte un orifice 31 d'alimentation unique. Le tronçon d'extrémité aval du conduit 14 d'alimentation débouche dans la tuyère 12 selon un axe "B" d'embranchement qui s'étend globalement radialement par rapport à l'axe "A1" d'entrée de la tuyère 12. L'axe "B" s'étend plus particulièrement dans un plan vertical transversal passant par l'axe "A1" d'entrée de la tuyère 12.

Le tronçon d'extrémité aval du conduit 14 d'alimentation est ici réalisé dans un bloc 25 de matière commun avec la tuyère 12.

Comme cela est illustré aux figures 2 et 3, le tronçon 12A d'entrée n'est pas agencé coaxialement au tronçon 12B de sortie. Le tronçon 12A d'entrée de la tuyère 12 s'étend selon un axe "A1" d'entrée qui est incliné d'un angle "β" dans un plan transversal vertical en direction de l'orifice 31 d'alimentation par rapport à une position coaxiale avec l'axe "A2" de sortie. Ainsi, l'axe "A1" d'entrée s'étend dans un plan défini par l'axe "A2" de sortie et l'axe "B" d'embranchement. L'angle "β" est non nul.

L'angle "β" est par exemple compris entre 1° et 70°. De préférence l'angle "β" est inférieur ou égal à 50°. Selon une conception préférée, l'angle "β" est inférieur ou égal à 30°.

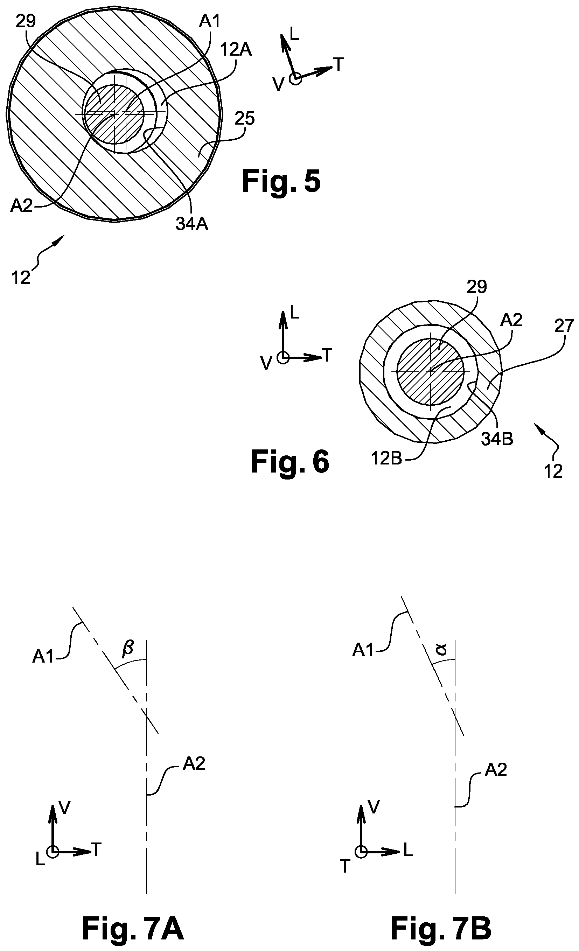

En variante représentée schématiquement à la figure 7, en plus de son inclinaison transversale, l'axe "A1" est incliné de l'angle "γ" dans un plan longitudinal vertical par rapport à l'axe "A2" de manière que l'axe "A2" de sortie ne soit pas compris dans le plan défini par l'axe "B" d'embranchement et l'axe "A1" d'entrée. L'angle "γ" est par exemple compris entre 0° et 70°. L'angle "γ" est de préférence inférieur à 50°.

Pour réduire au maximum les turbulences dans l'écoulement du fluide de soufflage, l'axe "B" d'embranchement n'est pas agencé à angle droit avec l'axe "A1" d'entrée. L'axe "B" d'embranchement forme un angle "α" obtus avec l'axe "A1" d'entrée de la tuyère 12 de manière que le fluide de soufflage sortant du conduit 14 d'alimentation soit dirigé vers le bas. Ainsi, ce raccordement à angle "α" obtus réduit, voire élimine, les turbulences et/ou les pertes de charge et/ou les ondes de choc lors du passage du flux de fluide de soufflage depuis le conduit 14 d'alimentation vers la tuyère 12.

Les turbulences, pertes de charge et ondes de choc sont aussi réduits, voire éliminés, lors du passage du fluide sous pression depuis le récipient 24 vers les moyens 22 de stockage au cours de l'opération d'échappement.

Les vannes 16A, 16B, 16C sont agencées en amont du tronçon d'extrémité aval du conduit 14 d'alimentation.

Dans le mode de réalisation représenté aux figures 2 et 3, le tronçon d'extrémité aval du conduit 14 d'alimentation présente un axe "B" rectiligne, et il présente une section sensiblement circulaire.

Le conduit 14 d'alimentation débouche plus particulièrement dans la tuyère 12 en passant partiellement à travers une portion d'extrémité transversale du plafond 32 qui est représentée à droite aux figures 2 et 3. Le conduit 14 d'alimentation débouche dans la tuyère 12 en passant aussi partiellement à travers la paroi 34A cylindrique du tronçon 12A d'entrée de la tuyère 12. L'orifice 31 d'alimentation chevauche ainsi le plafond 32 et la paroi 34Acylindrique de la tuyère 12.

L'axe "B" d'embranchement et l'axe "A1" d'entrée ne sont pas coaxiaux. Ainsi, l'axe "B" forme un angle "α - β" (angle "α" moins angle "β") avec l'axe "A2" de sortie. L'inclinaison de l'axe "B" par rapport à l'axe "A1" d'entrée, puis l'inclinaison de l'axe "A1" d'entrée par rapport à l'axe "A2" de sortie permettent d'amener progressivement le flux de fluide de soufflage dans la direction de l'axe "A2" de sortie, avec très peu de pertes de charge, de turbulences et d'ondes de choc.

L'angle "α - β" est par exemple supérieur ou égal à 110° et inférieur ou égal à 160°. De préférence, l'angle "α - β" est supérieur ou égal à 130°.

Le tronçon 12A d'entrée et le tronçon 12B de sortie présentent tous les deux une section de passage de même diamètre extérieur, la section étant prise de manière orthogonale à leur axe "A1" et "A2" respectifs.

En variante non représentée, le diamètre du tronçon d'entrée est différent du diamètre du tronçon de sortie. Dans ce cas, pour éviter la création de turbulences et d'ondes de chocs, un convergent ou un divergent est interposé entre les deux tronçons d'entrée et de sortie.

Comme représenté à la figure 6, le centre de la section agencée à l'extrémité inférieure du tronçon 12A d'entrée est coaxiale avec l'axe "A2" de sortie, tandis que, comme représenté à la figure 4, le centre "A1" de la section agencée à l'extrémité supérieure du tronçon 12A d'entrée est décalé transversalement vers la gauche par rapport à l'axe "A2" de sortie.

L'angle "β" est ici défini de manière que l'axe "A2" de sortie soit compris à l'intérieur du tronçon 12A d'entrée au moins jusqu'à la hauteur de l'orifice 31 d'alimentation. Ici, l'axe "A2" de sortie sort du tronçon 12A d'entrée en passant à travers le plafond 32.

La tige 29 d'élongation est montée coulissante verticalement dans la tuyère 12 au travers d'un passage 36 qui est réalisé au moins partiellement à travers le plafond 32. Le passage 36 se présente sous la forme d'une cheminée d'axe vertical coaxial à l'axe "A2" de sortie.

Du fait du diamètre de la tige 29 d'élongation, le passage est réalisé aussi partiellement dans une portion de la paroi 34A du tronçon 12A d'entrée qui est diamétralement opposée à l'orifice 31 d'alimentation. Comme représenté à la figure 3, l'intersection entre le passage 36 et la paroi 34A du tronçon 12A d'entrée s'étend depuis le plafond 32 jusqu'à environ la moitié de la hauteur du tronçon 12A d'entrée.

Comme représenté aux figures 4 à 6, le tronçon d'extrémité inférieure de la tige 29 d'élongation présente une section circulaire de diamètre constant. Le diamètre de la tige 29 d'élongation est inférieur au diamètre de l'orifice 28 de sortie de manière que le fluide de soufflage passe au travers du jeu annulaire réservé radialement entre la tige 29 d'élongation et la paroi 34B cylindrique interne du tronçon 12B de sortie.

Le tronçon 12A d'entrée de la tuyère 12 présente une section horizontale de passage du fluide dont l'aire diminue progressivement depuis l'orifice 31 d'alimentation jusqu'à mi-hauteur du tronçon 12A d'entrée. En effet, comme représenté à la figure 4, à la hauteur de l'orifice 31 d'alimentation, une partie de la section circulaire de la tige 29 d'élongation, ici sensiblement la moitié de ladite section, empiète sur la section horizontale du tronçon 12A d'entrée. Au fur et à mesure qu'on descend le long du tronçon 12A d'entrée, la section de la tige 29 d'élongation empiète de plus en plus sur la section horizontale de passage du fluide, jusqu'à être totalement comprise à l'intérieur de la section de passage du fluide, à mi-hauteur du tronçon 12A d'entrée, comme cela est illustré à la figure 5.

Ainsi, la section de passage du fluide diminue du fait de la présence de la tige 29 d'élongation. Cette diminution progressive de la section de passage permet d'accélérer sans à-coups la vitesse d'écoulement du fluide de soufflage depuis le haut vers l'orifice 28 inférieur de sortie. De plus, cela permet de répartir progressivement le flux de fluide de soufflage autour de la tige 29 d'élongation en évitant les turbulences.

Du fait de la présence de la tige 29 d'élongation, et comme cela est illustré par la figure 2, le flux de fluide de soufflage débouche directement sur la tige 29 qui est sensiblement parallèle à l'axe "A2"de sortie de la tuyère 12, tandis que la portion de paroi 34A qui est agencée directement sous l'orifice 31 d'alimentation présente une pente inclinée d'un angle "β" par rapport à l'axe "A2" de sortie de la tuyère 12. Dans la moitié supérieure du tronçon 12A d'entrée, le flux de fluide de soufflage débouche donc dans un volume libre sans obstacle.

La portion de paroi 34B qui est agencée directement sous l'orifice 31 d'alimentation est transversalement éloignée de la tige 29 d'élongation dans sa partie supérieure, pour se rapprocher en descendant vers le bas jusqu'à l'extrémité inférieure du tronçon 12A d'entrée.

La forme et l'aire de la section horizontale du tronçon 12B de sortie de la tuyère restent constantes sur toute sa hauteur. La section de passage du fluide présente ainsi une forme d'anneau coaxial à l'axe "A2" de sortie qui entoure la .tige 29 d'élongation.

Le flux de fluide de soufflage délivré par le conduit 14 d'alimentation est dirigé directement vers la tige 29 d'élongation avec l'angle "α - β". Ainsi, le flux de fluide de soufflage glisse vers le bas le long de la tige 29 d'élongation en profitant du volume libre entre la paroi 34A du tronçon 12A d'entrée et la tige 29 d'élongation.

La tige 29 d'élongation est guidée en coulissement vertical par au moins une bague 38 supérieure et une bague 40 d'extrémité inférieure.

De manière générale, dans une tuyère 12 réalisée selon les enseignements de l'invention, la bague 40 d'extrémité inférieure est agencée verticalement au-dessus de l'orifice 31 d'alimentation du conduit 14 d'alimentation avec la tuyère 12. Ainsi, la bague 40 d'extrémité inférieure n'est pas agencée sur le chemin du flux de fluide de soufflage. Ceci évite les pertes de charges, les turbulences et autres ondes de choc.

A cet effet, la tuyère 12 présente une longueur suffisamment courte pour que la tige 29 d'élongation puisse être guidée en évitant que son tronçon d'extrémité inférieur ne fléchisse sous l'effet de flambement, particulièrement lorsque la tige 29 d'élongation étire la préforme 24.

Dans le mode de réalisation de l'invention qui est représenté aux figures, la bague 40 d'extrémité inférieure est agencée au-dessus du plafond de la tuyère 12. Un logement est formé dans la face supérieure du bloc 25 afin de recevoir ladite bague 40 d'extrémité inférieure.

Il est connu d'associer auxbagues38 ou 40 de guidage des moyens 42 d'étanchéité qui ont pour but d'empêcher le fluide de soufflage de sortir de la tuyère 12 vers le haut.

Un orifice 44de prise de pression est agencé diamétralement à l'opposé de l'orifice 31 d'alimentation, dans une paroi du passage 36 de la tige 29 d'élongation. L'orifice 44 de prise de pression est agencé au-dessous des moyens 42 d'étanchéité de manière que du fluide de soufflage puisse pénétrer dans le jeu de coulissement réservé radialement entre le passage 36 et la tige 29 d'élongation. Ainsi la tige 29 d'élongation est interposée entre l'orifice 31 d'alimentation et l'orifice 44de prise de pression. De manière surprenante, on a constaté que cet agencement permet de mesurer une pression génératrice qui est approximativement égale à la pression génératrice moyenne du fluide de soufflage à l'intérieur de la tuyère 12.

De plus, l'orifice 44de prise de pression est agencé à l'écart du flux de fluide de soufflage. Un tel agencement permet avantageusement d'éviter que l'orifice 44 de prise de pression ne perturbe l'écoulement du flux de fluide de soufflage.

Lors de l'étape de soufflage ou de pré-soufflage, le fluide de soufflage est injecté dans la tuyère 12 via le conduit 14 d'alimentation. Le flux de fluide de soufflage descend verticalement le long de la tige 29 d'élongation pour atteindre l'orifice 28 de sortie avec une très grande vitesse qui est légèrement inférieure à la vitesse du son.

En partie supérieure de la tuyère 12, le flux de fluide de soufflage occupe le volume qui est compris entre la paroi 34A du tronçon 12A d'entrée et la tige 29 d'élongation. En arrivant à l'orifice 28 de sortie, le flux de fluide de soufflage occupe de manière homogène toute la section de la tuyère 12.

A part la tige 29 d'élongation, entre l'orifice 31 d'alimentation et l'orifice 28 de sortie, la tuyère 12 ne comporte aucun obstacle susceptible de perturber l'écoulement du fluide de soufflage. Ceci est notamment dû à l'agencement de la bague 40 d'extrémité inférieure au-dessus de l'orifice 31 d'alimentation. Ainsi, aucune arête ou aucune courbure n'est susceptible de provoquer à l'intérieur de la tuyère 12 une onde de choc droite, oblique ou de détente.

Du fait de l'agencement de la bague 40 d'extrémité inférieure au-dessus de l'orifice 31 d'alimentation, la tuyère 12 est verticalement très courte. Ceci permet avantageusement de disposer d'une tuyère 12 avec un volume relativement faible qui permet une montée en pression très rapide du fluide de soufflage dans la tuyère 12.

En outre, le conduit 14 d'alimentation est avantageusement relié aux vannes 16A, 16B, 16C en proposant un parcours réduisant les perturbations de l'écoulement du fluide de soufflage et évitant les pertes de charges et les ondes de choc. Le conduit 14 d'alimentation présente par exemple un axe moyen rectiligne, ou éventuellement curviligne dans lequel les rayons de courbure minimaux sont conçus pour assurer une connexion fluide des différentes conduites pour un écoulement harmonieux du fluide de soufflage.

## Revendications

1. Dispositif (10) de soufflage destiné au formage de récipients (24) à partir de préformes en matériau thermoplastique, le dispositif (10) comportant :
- une tuyère (12) de soufflage comportant à son extrémité inférieure un orifice (28) de sortie d'un fluide de soufflage sous pression selon un axe (A2) vertical de sortie et comportant un tronçon supérieur d'entrée réalisé dans un bloc (25) de matériau métallique ;
- un conduit (14) unique d'alimentation de la tuyère (12) en fluide de soufflage qui débouche dans un tronçon (12A) supérieur d'entrée de la tuyère (12) par l'orifice (31) supérieur d'alimentation, le tronçon d'extrémité aval dudit conduit (14) étant orienté globalement radialement par rapport à l'axe (A1) d'entrée du tronçon (12A) d'entrée de la tuyère (12) ;
**caractérisé en ce que** le tronçon d'extrémité aval du conduit (14) d'alimentation débouche dans la tuyère (12) selon un axe (B) d'embranchement qui forme un angle (a) obtus avec l'axe (A1) d'entrée de la tuyère (12) de manière que le fluide de soufflage sortant du conduit (14) d'alimentation soit dirigé vers le bas.

2. Dispositif (10) selon la revendication précédente, **caractérisé en ce qu'**un tronçon d'extrémité aval du conduit (14) d'alimentation présente un axe (B) rectiligne.

3. Dispositif (10) selon l'une quelconque des revendications précédentes, **caractérisé en ce que** l'axe (A1) d'entrée est incliné d'un angle (β, γ) par rapport à l'axe (A2) de sortie, et **en ce que** la tuyère (12) présente un tronçon (12B) inférieur de sortie coaxial à l'axe (A2) de sortie.

4. Dispositif (10) selon la revendication précédente, **caractérisé en ce que** l'axe (A1) d'entrée, l'axe (A2) de sortie et l'axe (B) d'embranchement sont agencés dans un même plan.

5. Dispositif (10) selon la revendication précédente, **caractérisé en ce que** l'axe (A2) de sortie de la tuyère 12 est compris à l'intérieur du tronçon (12A) d'entrée de la tuyère (12) jusqu'à son plafond (32).

6. Dispositif (10) selon l'une quelconque des revendications 3 à 5, **caractérisé en ce qu'**à la hauteur de l'orifice (31) d'alimentation, la tuyère (12) présente une section dont le centre est décalé transversalement vers l'orifice (31) d'alimentation par rapport à l'axe (A2) de sortie de la tuyère (12).

7. Dispositif (10) selon l'une quelconque des revendications 3 à 6, **caractérisé en ce que** l'orifice (28) de sortie présente une section de forme sensiblement circulaire de centre coaxial à l'axe (A2) de sortie de la tuyère (12).

8. Dispositif (10) selon l'une quelconque des revendications précédentes, **caractérisé en ce que** la tuyère (12) est délimitée vers le haut par un plafond (32), et **en ce que** le conduit (14) d'alimentation débouche dans la tuyère (12) en passant au moins partiellement à travers le plafond (32).

9. Dispositif (10) selon l'une quelconque des revendications précédentes, **caractérisé en ce que** le conduit (14) d'alimentation débouche dans la tuyère (12) en passant au moins partiellement à travers une paroi (34B) latérale de la tuyère (12).

10. Dispositif (10) selon l'une quelconque des revendications précédentes, **caractérisé en ce qu'**il comporte une tige (29) verticale d'élongation qui est montée coulissante verticalement dans la tuyère (12) au travers d'un passage (36) qui est réalisé au moins partiellement à travers le plafond (32), la tige (29) d'élongation étant agencée de manière coaxiale à l'axe (A2) de sortie.

11. Dispositif (10) selon la revendication précédente, **caractérisé en ce que** le passage (36) de la tige (29) d'élongation est réalisé au moins partiellement à travers une paroi (34B) opposée à l'orifice (31) d'alimentation.

12. Dispositif (10) selon la revendication précédente, **caractérisé en ce que** la tige (29) d'élongation est agencée de manière que le flux de fluide de soufflage délivré par le conduit (34) d'alimentation soit dirigé directement sur la tige (29) d'élongation.

13. Dispositif (10) selon l'une quelconque des revendications précédentes, **caractérisé en ce que** la tuyère (12) présente une section dont l'aire diminue progressivement en descendant le long de l'axe (A2) de sortie depuis l'orifice (31) d'alimentation.

14. Dispositif (10) selon l'une quelconque des revendications 9 à 12, **caractérisé en ce que** la tige (29) d'élongation est guidée en coulissement par au moins une bague (38) supérieure et une bague (40) d'extrémité inférieure, la bague (40) d'extrémité inférieure étant agencée verticalement au-dessus de l'orifice (31) d'alimentation.

15. Dispositif (10) selon l'une quelconque des revendications 9 à 13, **caractérisé en ce que** des moyens (42) d'étanchéité sont interposés dans le passage (36) de la tige (29) d'élongation au-dessus de l'orifice (31) d'alimentation pour empêcher la fuite du fluide de soufflage vers le haut.

16. Dispositif (10) selon l'une quelconque des revendications précédentes, **caractérisé en ce qu'**un orifice (44) de prise de pression est agencé diamétralement à l'opposé de l'orifice (31) d'alimentation dans la paroi du passage (36), au-dessous des moyens (42) d'étanchéité.

## Patentansprüche

1. Blasvorrichtung (10), welche zum Formen von Behältern (24) aus Preformen aus thermoplastischem Material bestimmt ist, wobei die Vorrichtung (10) aufweist:
- eine Blasdüse (12), die an ihrem unteren Ende eine Öffnung (28) für den Austritt eines Blasfluids unter Druck entlang einer vertikalen Austrittsachse (A2) aufweist und einen oberen Eintrittsabschnitt aufweist, der in einem Block (25) aus metallischem Material ausgebildet ist;
- eine einzige Leitung (14) zur Zuführung von Blasfluid zu der Düse (12), welche über die obere Zuführungsöffnung (31) in einen oberen Eintrittsabschnitt (12A) der Düse (12) mündet, wobei der stromabwärtige Endabschnitt der Leitung (14) im Wesentlichen radial in Bezug auf die Eintrittsachse (A1) des Eintrittsabschnitts (12A) der Düse (12) ausgerichtet ist;
**dadurch gekennzeichnet, dass** der stromabwärtige Endabschnitt der Zuführungsleitung (14) in die Düse (12) entlang einer Abzweigachse (B) mündet, welche einen stumpfen Winkel (α) mit der Eintrittsachse (A1) der Düse (12) bildet, so dass das aus der Zuführungsleitung (14) austretende Blasfluid nach unten gelenkt wird.

2. Vorrichtung (10) nach dem vorhergehenden Anspruch, **dadurch gekennzeichnet, dass** ein stromabwärtiger Endabschnitt der Zuführungsleitung (14) eine gerade Achse (B) aufweist.

3. Vorrichtung (10) nach einem der vorhergehenden Ansprüche, **dadurch gekennzeichnet, dass** die Eintrittsachse (A1) um einen Winkel (β, γ) bezüglich der Austrittsachse (A2) geneigt ist, und dadurch, dass die Düse (12) einen unteren Austrittsabschnitt (12B) aufweist, der mit der Austrittsachse (A2) koaxial ist.

4. Vorrichtung (10) nach dem vorhergehenden Anspruch, **dadurch gekennzeichnet, dass** die Eintrittsachse (A1), die Austrittsachse (A2) und die Abzweigachse (B) in derselben Ebene angeordnet sind.

5. Vorrichtung (10) nach dem vorhergehenden Anspruch, **dadurch gekennzeichnet, dass** die Austrittsachse (A2) der Düse (12) bis zur Decke (32) des Eintrittsabschnitts (12A) der Düse (12) in dessen Innerem enthalten ist.

6. Vorrichtung (10) nach einem der Ansprüche 3 bis 5, **dadurch gekennzeichnet, dass** auf der Höhe der Zuführungsöffnung (31) die Düse (12) einen Querschnitt aufweist, dessen Mittelpunkt in Bezug auf die Austrittsachse (A2) der Düse (12) in Querrichtung zur Zuführungsöffnung (31) hin versetzt ist.

7. Vorrichtung (10) nach einem der Ansprüche 3 bis 6, **dadurch gekennzeichnet, dass** die Austrittsöffnung (28) einen im Wesentlichen kreisförmigen Querschnitt mit einem Mittelpunkt, der mit der Austrittsachse (A2) der Düse (12) koaxial ist, aufweist.

8. Vorrichtung (10) nach einem der vorhergehenden Ansprüche, **dadurch gekennzeichnet, dass** die Düse (12) oben durch eine Decke (32) begrenzt ist, und dadurch, dass die Zuführungsleitung (14) in die Düse (12) mündet, indem sie wenigstens teilweise durch die Decke (32) hindurch verläuft.

9. Vorrichtung (10) nach einem der vorhergehenden Ansprüche, **dadurch gekennzeichnet, dass** die Zuführungsleitung (14) in die Düse (12) mündet, indem sie wenigstens teilweise durch eine Seitenwand (34B) der Düse (12) hindurch verläuft.

10. Vorrichtung (10) nach einem der vorhergehenden Ansprüche, **dadurch gekennzeichnet, dass** sie einen vertikalen Verlängerungsschaft (29) aufweist, welcher in der Düse (12) vertikal verschiebbar durch einen Durchlass (36) hindurch, welcher wenigstens teilweise durch die Decke (32) hindurch ausgebildet ist, angebracht ist, wobei der Verlängerungsschaft (29) koaxial mit der Austrittsachse (A2) angeordnet ist.

11. Vorrichtung (10) nach dem vorhergehenden Anspruch, **dadurch gekennzeichnet, dass** der Durchlass (36) des Verlängerungsschaftes (29) wenigstens teilweise durch eine Wand (34B) hindurch ausgebildet ist, die der Zuführungsöffnung (31) gegenüberliegt.

12. Vorrichtung (10) nach dem vorhergehenden Anspruch, **dadurch gekennzeichnet, dass** der Verlängerungsschaft (29) derart angeordnet ist, dass der Strom von Blasfluid, der von der Zuführungsleitung (34) geliefert wird, direkt auf den Verlängerungsschaft (29) gelenkt wird.

13. Vorrichtung (10) nach einem der vorhergehenden Ansprüche, **dadurch gekennzeichnet, dass** die Düse (12) einen Querschnitt aufweist, dessen Fläche sich von der Zuführungsöffnung (31) entlang der Austrittsachse (A2) nach unten allmählich verkleinert.

14. Vorrichtung (10) nach einem der Ansprüche 9 bis 12, **dadurch gekennzeichnet, dass** der Verlängerungsschaft (29) durch wenigstens eine obere Hülse (38) und eine untere Endhülse (40) gleitend geführt wird, wobei die untere Endhülse (40) vertikal über der Zuführungsöffnung (31) angeordnet ist.

15. Vorrichtung (10) nach einem der Ansprüche 9 bis 13, **dadurch gekennzeichnet, dass** Dichtmittel (42) in dem Durchlass (36) des Verlängerungsschaftes (29) über der Zuführungsöffnung (31) angeordnet sind, um das Entweichen des Blasfluids nach oben zu verhindern.

16. Vorrichtung (10) nach einem der vorhergehenden Ansprüche, **dadurch gekennzeichnet, dass** eine Druckmessöffnung (44) diametral gegenüber der Zuführungsöffnung (31) in der Wand des Durchlasses (36), unterhalb der Dichtmittel (42), angeordnet ist.

## Claims

1. Blowing device (10) which is intended for forming containers (24) from preforms of thermoplastic material, the device (10) comprising:
- a blowing nozzle (12) which comprises at the lower end thereof an outlet opening (28) for a blowing fluid under pressure in accordance with a vertical outlet axis (A2) and which comprises an upper inlet portion constructed from a block (25) of metal material;
- a single supply duct (14) which is for supplying the nozzle (12) with blowing fluid and which opens in an upper inlet portion (12A) of the nozzle (12) via the upper supply opening (31), the downstream end portion of said duct (14) being generally orientated radially relative to the inlet axis (A1) of the inlet portion (12A) of the nozzle (12);
**characterized in that** the downstream end portion of the supply duct (14) opens in the nozzle (12) in accordance with a branching axis (B) which forms an obtuse angle (α) with the inlet axis (A1) of the nozzle (12) so that the blowing fluid which is discharged from the supply duct (14) is directed downward.

2. Device (10) according to the preceding claim, **characterized in that** a downstream end portion of the supply duct (14) has a rectilinear axis (B).

3. Device (10) according to either of the preceding claims, **characterized in that** the inlet axis (A1) is inclined through an angle (β, γ) relative to the outlet axis (A2) and **in that** the nozzle (12) has a lower outlet portion (12B) which is coaxial relative to the outlet axis (A2).

4. Device (10) according to the preceding claim, **characterized in that** the inlet axis (A1), the outlet axis (A2) and the branching axis (B) are arranged in the same plane.

5. Device (10) according to the preceding claim, **characterized in that** the outlet axis (A2) of the nozzle (12) is contained inside the inlet portion (12A) of the nozzle (12) as far as the upper member (32) thereof.

6. Device (10) according to any one of Claims 3 to 5, **characterized in that**, at the height of the supply opening (31), the nozzle (12) has a cross section whose center is transversely offset toward the supply opening (31) relative to the outlet axis (A2) of the nozzle (12) .

7. Device (10) according to any one of Claims 3 to 6, **characterized in that** the outlet opening (28) has a substantially circular cross section which has a center which is coaxial relative to the outlet axis (A2) of the nozzle (12).

8. Device (10) according to any one of the preceding claims, **characterized in that** the nozzle (12) is delimited in an upward direction by an upper member (32), and **in that** the supply duct (14) opens in the nozzle (12) and extends at least partially through the upper member (32).

9. Device (10) according to any one of the preceding claims, **characterized in that** the supply duct (14) opens in the nozzle (12) and extends at least partially through a lateral wall (34B) of the nozzle (12).

10. Device (10) according to any one of the preceding claims, **characterized in that** it comprises a vertical elongation rod (29) which is mounted so as to slide vertically in the nozzle (12) through a passage (36) which is constructed at least partially through the upper member (32), the elongation rod (29) being arranged coaxially relative to the outlet axis (A2).

11. Device (10) according to the preceding claim, **characterized in that** the passage (36) of the elongation rod (29) is constructed at least partially through a wall (34B) opposite the supply opening (31).

12. Device (10) according to the preceding claim, **characterized in that** the elongation rod (29) is arranged in such a manner that the flux of blowing fluid supplied by the supply duct (34) is directed directly onto the elongation rod (29).

13. Device (10) according to any one of the preceding claims, **characterized in that** the nozzle (12) has a cross section whose surface area progressively decreases in a downward direction along the outlet axis (A2) from the supply opening (31).

14. Device (10) according to any one of Claims 9 to 12, **characterized in that** the elongation rod (29) is slidingly guided by at least one upper ring (38) and one lower end ring (40), the lower end ring (40) being arranged vertically above the supply opening (31).

15. Device (10) according to any one of Claims 9 to 13, **characterized in that** sealing means (42) are interposed in the passage (36) of the elongation rod (29) above the supply opening (31) in order to prevent the blowing fluid from leaking upward.

16. Device (10) according to any one of the preceding claims, **characterized in that** a pressure measuring opening (44) is arranged diametrically opposite the supply opening (31) in the wall of the passage (36), below the sealing means (42).
